# DEMANDE DE BREVET EUROPEEN

(11) **EP 1 632 667 A1**
(43) Date de publication de la demande: **08.03.2006**
(21) Numéro de dépôt: 04300167.6
(22) Date de dépôt: 07.09.2004
(51) Int. Cl.: F02D 41/02, F02D 41/40

(54) **Procédé de régénération d'un filtre à particules et dispositif de mise en oeuvre d'un tel procédé**

(71) Demandeur: Renault s.a.s., 92100 Boulogne Billancourt (FR)
(72) Inventeur: Baux, Antoine, 75015 Paris (FR); Bergeris, Cédric, 45300 Engenville (FR); Cruchet, Jérôme, 91650 Breuillet (FR)

(57) **Abrégé**

La présente invention concerne un procédé de régénération d'un filtre à particules (6) fonctionnant dans un circuit d'échappement d'un moteur à combustion interne (1), le procédé consistant à retarder l'injection principale de carburant d'un angle ϕ qui est déterminé par rapport au point mort haut et qui dépend du point de fonctionnement moteur.

Ledit procédé comporte par ailleurs les étapes consistant à:
- déterminer la valeur effective d'au moins un facteur extérieur susceptible d'nfluer sur la température d'échappement moteur,
- modifier le retard d'injection principale ϕ préprogrammé, en fonction de l'écart entre la valeur effective et la valeur théorique de chaque facteur extérieur,
- modifier la quantité de carburant injectée de manière à maintenir le couple moteur constant.

## Description

La présente invention concerne un procédé destiné à la régénération d'un filtre à particules inséré dans un circuit d' échappement d'un moteur à combustion interne.

L'invention concerne également un dispositif permettant la mise en oeuvre de ce procédé de régénération .

L'invention trouve une application particulièrement avantageuse, mais non exclusive, dans le domaine automobile.

Le fonctionnement d'un moteur à combustion interne génère toujours des rejets de particules car la combustion d'un hydrocarbure n'y est jamais totalement complète, et ce quelle que soit la nature du combustible utilisé. Ces particules solides, appelées communément suies, sont composées principalement de carbone et d'hydrocarbures imbrûlés et sont véhiculés par les gaz d'échappement.

Pour éliminer ce type de rejets et ainsi diminuer la pollution du moteur, il est connu d'utiliser un filtre à particules inséré dans le circuit d'échappement. Le principe est classique, une filtration purement mécanique qui consiste schématiquement à piéger les particules au passage des gaz d'échappement, en les bloquant et en les stockant par l'intermédiaire d' une structure poreuse.

Pour assurer le bon fonctionnement d'un filtre à particules, et éviter notamment son colmatage par les suies, il est nécessaire de procéder périodiquement à une régénération. Cette opération consiste à brûler les particules accumulées sur le filtre en procédant a une élévation de la température des gaz d'échappement aux environs des 600 °C. En effets, dans cette plage de températures et en présence d'oxygène, la combustion des suies s'effectue naturellement. Un tel accroissement de température est généralement obtenu en dégradant le rendement du moteur à combustion interne par des moyens appropriés.

Un procédé actuel consiste à retarder l'injection principale de carburant d'un angle ϕ qui est déterminé par rapport au point mort haut et qui est dépendant du point de fonctionnement du moteur. Alors qu'elle s'effectue généralement avant le point mort haut en utilisation normale, l'injection principale est réalisée après cette zone de rendement optimale pendant la phase de régénération. Le rendement de la combustion est ainsi sensiblement dégradé, ce qui signifie qu'avec une même quantité de carburant injectée, on va récupérer moins d'énergie mécanique sur le piston mais par contre plus d'énergie thermique à l'échappement. En fait, on dégrade volontairement le rendement moteur en terme d'énergie mécanique récupérée. On récupère ainsi davantage d'énergie thermique à l'échappement, ce qui permet conséquemment d'augmenter la température à l'intérieur de la ligne d'échappement, Dans la pratique, la mise en oeuvre des différents moyens permettant la régénération est pilotée par le calculateur de contrôle moteur qui détermine, en fonction de plusieurs facteurs, l'instant de la régénération, sa durée, ainsi que les paramètres d'injection pendant cette phase; nombre d'injections, débit, durée et phasage de chaque injection.

Ce type de peecédé de régénération présente toutefois l'inconvénient d'être défini pour des conditions d'utilisation données qui sont fixées lors du paramétrage des différents rroyens permettant la mise en oeuvre dudit procédé, par exemple à l'aide d'un banc moteur. L'élévation de température est en fait préprogrammée indépendamment des conditions réelles d'utilisation, et à ce titre elle ne prend notamment en compte que des valeurs déterminées pour les facteurs extérieurs susceptibles d'avoir un impact sur la température d'échappement.

Il est à noter que dans l'ensemble de ce texte, un facteur extérieur désigne tout paramètre ou grandeur physique qui est externe au bloc auteur proprement dit, comme par exemple la contre-pression d'échappement ou la température d'air d'admission. La valser effective de ce facteur extérieur est celle qui correspond aux conditions réelles d'utilisation du moteur au moment de la régénération. Sa valeur théorique est quant è elle celle qui correspond aux conditions d'utilisation prises en compte lors du paramétrage de la régénération.

Quoi qu'il en soit, la valeur effective de chacun de ces facteurs extérieurs peut varier à l'usage de manière importante par rapport à sa valeur théorique. Ce type de facteur extérieur est par conséquent en mesure de modifier la température des gaz d'échappement dans des proportions toutes aussi significatives, que ce soit à la baisse ou à la hausse. Or la plage de températures de régénération est relativement étroite, notamment dans le cas d'un filtre à particules catalytique. On peut ainsi être amené à ne pas régénérer le filtre si la température des gaz d'échappement est trop basse, par exemple inférieure à 570°C dans le cas d'un filtre catalytique. Si par contre la température venait à être trop élevée, par exemple supérieure à 650°C dans le cas d'un filtre à particules catalytique, certains éléments du circuit d'échappement pourraient être dététiorés. On pense par exemple à la partie active d'un filtre catalytique et/ou à la turbine d'un dispositif de suralimentation,

Il, est à noter que dans le cas particulier où une turbine serait présente dans le circuit d'échappement, il apparaît indispensable de respecter la température maximale admissible avant ladite turbine. En effet, comme elle est positionnée dans la ligne d'échappement entre le moteur et la filtre à particules, la turbine subit systématiquement des températures plus élevées que celles dudit filtre à particules. Or comme on est par ailleurs obligé d'avoire des températures relativement importantes au niveau du filtre à particules pour pouvoir le régénérer, cela signifie que la turbine va devoir résister à des contraintes thermiques encore plus importantes. Or aujourd'hui, on a atteint les limites de ce que peut supporter une turbine de technologie actuelle, de sorte qu'il est impératif de bien maîtriser la température pour de pas l'endommager

Aussi le problème technique à résoudre, par l'objet de la présente invention, est de proposer un procédé de régénération d'un filtre à particules fonctionnant dans un circuit d'échappement d'un moteur à combustion interne, le procédé consistant à retarder l'injection principale de carburant d'un angle ϕ préprogrammé qui est déterminé par rapport au point mort haut et qui dépend du point de fonctionnement du moteur, procédé de régénération qui permettrait d'éviter les problèmes de l'état de la technique en garantissant notamment une température de gaz d'échappement compatible avec la plage de températures de régénération du filtre à particules, et ce quelles que soient les variations des facteurs extérieurs susceptibles d'influer sur ladite température des gaz d'échappement.

La solution au problème technique posé consiste, selon la présente invention, en ce que le procédé comporte par ailleurs les étapes consistant à :
- déterminer la valeur effective d'au moins un facteur extérieur susceptible d' influer sur la température d'échappement moteur,
- modifier le retard d'injection principale ϕ préprogrammé, en fonction de l'écart entre la valeur effective et la valeur théorique de chaque facteur extérieur,
- modifier la quantité de carburant injectée de manière à maintenir le couple moteur constant.

On connaît l'influence de chaque facteur extérieur sur la température des gaz d'échappement. On sait faire varier la température d'échappement par des réglages d'injection, notamment de l'angle d'injection. Par conséquent, on sait corriger le retard d'injection principale pour ramener la température des gaz d'échappement dans une plage otpimale pour la régénération. Par ailleurs, on connaît l'influence de l'angle d'injection sur le couple moteur. On sait également moduler le couple moteur en fonction de la quantité de carburant injectée. Par conséquent, on sait corriger la quantité de carburant injectée de manière à maintenir le couple moteur constant.

L'invention telle qu'ainsi définie présente l'avantage de tenir compte des conditions réelles d'utilisation pour générer une température de gaz d'échappement compatible avec la régénération du filtre à particules. Elle permet d'apporter des corrections par rapport à des réglages standards préprogrammés, pour compenser les effets induits par des facteurs extérieurs susceptibles d'influer sur la température des gaz d'échappement, et ainsi maintenir ladite température à la valeur désirée.

L'invention peut s'appliquer aux filtres à particules aussi bien classiques que catalytiques, même si son intérêt s'avère plus significatif dans le cas des derniers cités. La régénération d'un filtre catalytique exige en effet une plage de température plus réduite et donc mieux maîtrisée, afin de préserver le catalyseur d'oxydation dont il est imprégné et qui lui permet d'obtenir une combustion spontanée des suies à des températures plus faibles. Il est à noter qu'actuellement, les filtres à particules sont essentiellement utilisés dans les moteurs diesel mais il est parfaitement possible qu'ils se généralisent un jour aux motorisations essences, notamment à injection directe.

Selon une particularité de l'invention, lorsque la différence entre la valeur effective d'un facteur extérieur et sa valeur théorique est telle qu'elle tend à entraîner une diminution, de la température des gaz d'échappement, la seconde étape consiste à commander un retard d'injection principale ϕ^{r} supérieur au retard d' injection principale ϕ préprogrammé et à augmenter la quantité de carburant injectée.

Selon une autre particularité de l'invention, lorsque la différence entre la valeur effective d'un facteur extérieur et sa valeur théorique est telle qu'elle tend à entraîner une augmentation de la température des gaz d'échappement, la seconde étape consiste à commander un retard d'injection principale ϕ'' inférieur au retard d'injection principale ϕ préprogrammé et à diminuer la quantité de carburant injectée.

Selon un mode de mise en oeuvre actuellement préféré de l'invention, la détermination de la valeur effective d'un facteur extérieur susceptible d'influer sur la température d'échappement est réalisée au moyen d'un capteur de mesure.

Mais selon une variante de l'invention, la détermination de la valeur effective d'un facteur extérieur susceptible d' influer sur la température d'échappement peut être réalisée au moyen d'un modèle mathématique.

De manière particulièrement avantageuse, un facteur extérieur pris en compte par le procédé selon l'invention est la contre-pression des gaz d'échappement.

Conformément à une autre caractéristique avantageuse du procédé selon l'invention, un facteur extérieur pris en compte est la température d'air d'admission.

L' invention concerne également un dispositif permettant la mise en oeuvre du procédé de régénération précédemment décrit. Il est remarquable en ce qu' il comporte:
- des premiers moyens aptes à déterminer la valeur effective d'au moins un facteur extérieur susceptible d'influer sur la température d'échappement moteur,
- des seconds moyens aptes à modifier le retard d'injection principale ϕ préprogrammé, en fonction de l' écart entre la valeur effective et la valeur théorique de chaque facteur extérieur,
- des troisièmes moyens aptes à modifier la quantité de carburant injectée de manière à maintenir le couple moteur constant.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels:

Le système de contrôle moteur, et plus précisément le calculateur 11, est en outre pourvu de seconds moyens qui sont chargés de modifier le retard d'injection principale ϕ préprogrammé, en fonction de l'écart entre la valeur effective et la valeur théorique de la contre-passion des gaz d'échappement. C'est ici le calculateur 11 qui pilote les injecteurs 3. Or il connait l'influence de la contre-pression sur la température des gaz d'échappement. Il sait par ailleurs faire varier la température d'échappement en retardant plus ou moins l'injection. Par conséquent, le calculateur 11 est en mesure de ramener la température des gaz d'échappement dans la plage optimale de régénération.

Le système de contrôle moteur, et plus précisément le calculateur 11, est enfin doté de troisièmes moyens qui sont aptes à modifier la quantité de carburant injectée de manière à maintenir le couple moteur constant. Là encore, le calculateur 11 pilotant les injecteurs 3 connaît l'influence de l'angle d'injection sur le couple moteur et sait moduler ledit couple moteur en fonction de la quantité de carburant injectée. Par conséquent, le calculateur est parfaitement capable de corriger la quantité de carburant injectée afin de maintenir le couple moteur constant.

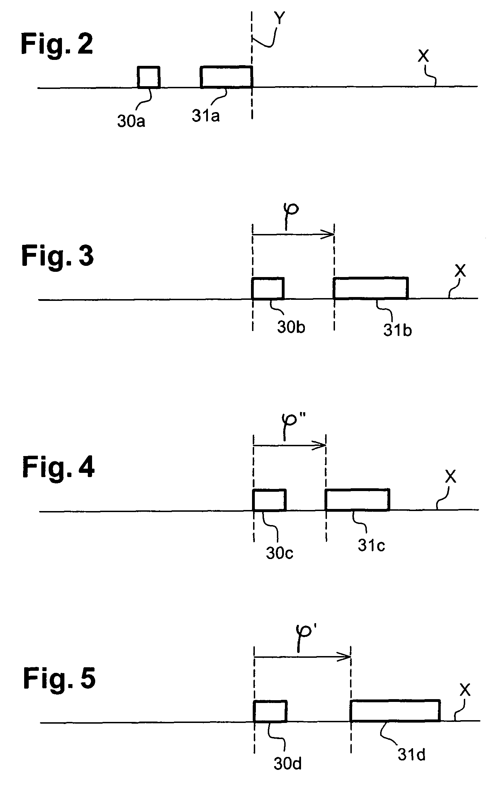

Les figures 2 à 5 constituent des schémas relatifs à différents motifs d'injection applicables à un cylindre de moteur diesel. Ainsi, dans l'exemple particulier choisi ici pour illustrer l'invention, l'injection s'effectue sous forme de séquence. Elle se compose d'une pré-injection 30 qui, en injection.
La figure 1 illustre schématiquement l'interdépendance entre un moteur à combustion interne doté d'un filtre à particules et son système de contrôle.
La figure 2 représente un motif d'injection correspondant à un fonctionnement normal du moteur.
La figure 3 fait apparaître un motif d'injection correspondant à un fonctionnement classique en cours de phase de régénération.
La figure 4 montre un motif d'injection correspondant, en phase de régénération, à un premier type de correction conformément au procédé selon l' invention.
La figure 5 illustre un motif d'injection correspondant, en phase de régénération, à un second type de correction conformément au procédé selon l'invention.

Pour des raisons de clarté, les mêmes éléments ont été désignés par des références identiques. De même, seuls les éléments essentiels pour la compréhension de l'invention ont été représentés, et ceci sans respect de l'échelle et de manière schematique.

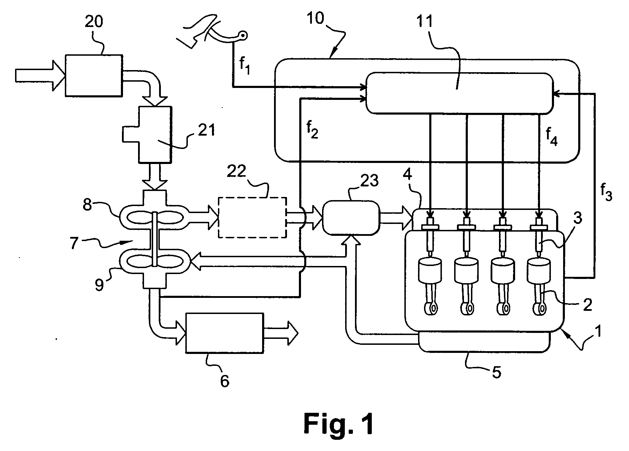

La figure 1 illustre un moteur à combustion interne qui est constitué, dans cet exemple particulier de réalisation, par un moteur à explosion 1 de type quatre cylindre turbo diesel. Quatre ensembles bielle/piston 2 coopérant respectivement avec quatre injecteurs 3 ont en effet été représentés. On distingue également un collecteur d'admission 4 et un collecteur d'echappement 5 communiquant avec un filtre à particules 6.

On remarque par ailleurs la présence d'un turbocompresseur 7 qui, de manière classique, se compose d'un compresseur 8 et d'une turbine 9. Un système de contrôle moteur 10 est également représenté. Il comporte un calculateur d'injection 11, ainsi que différents capteurs et actionneurs respectivement symbolisés par des flèches rentrantes f1, f2, f3 et des flèches sortantes f4. Les informations susceptibles d'être mesurées par les capteurs peuvent être d'origines diverses: vitesse de rotation du moteur (flèche f3), contre-pression échappement (flèche f2), température d'admission, position pédale (flèche f1) correspondant à la demande conducteur, etc. Les commandes contrôlées par le calculateur peuvent également être multiples, et concerne par exemple le pilotage (flèche f5) des injecteurs 3.

En entrée, le circuit d'admission est classiquement composé d'un filtre à air 20 chargé de capter et de purifier l'air destiné à être admis dans le moteur 1, ainsi que d'un débitmètre 21 destiné à renseigner le calculateur 11 sur la quantité d'air frais qui entre dans ledit moteur 1. L'air d'admission est ensuite comprimé dans le compresseur 8 avant d'être refroidi dans un échangeur thermique 22, puis d'atteindre le collecteur d'admission 4 via une vanne 23 de type EGR. Cette vanne 23, pilotée par calculateur 11, permet classiquement une recirculation des gaz du collecteur d'échappement 5 au collecteur d'admission 4.

Le circuit d'échappement est tout aussi classiquement composé du collecteur d'échappement 5 chargé de rassembler les gaz issus du fonctionnement du moteur 1, ainsi que de la turbine 9 destinée à mettre en oeuvra le compresseur 8 grâce au passage desdits gaz d'échappement. On retrouve ensuite le filtre à particules 6 qui précède encore d'autres éléments de la ligne d'échappement, non représentés ici pour des raisons de clarté. On pense surtout à des catalyseurs et autres silencieux.

Le système de contrôle moteur 10, et plus précisément le calculateur 11, comporte tout d'abord des premiers moyens qui sont en mesure de déterminer la valeur effective de la contre-pression des gaz d'échappement, c'est-à-dire la pression dans la ligne d'échappement entre le moteur 1 et le filtre à particules 6. Cette grandeur est variable car au fur et à mesuré que le filtre 6 se remplit, il devient de moins en moins perméable, de sorte que la pression en sortie moteur augmente.

Dans cet exemple de réalisation, la détermination de la valeur effective de la contre-pression des gaz d'échappement s'effectue au moyen d'un capteur de mesure connecté au calculateur 11. Le capteur de pression en question est ici placé entre la turbine 9 et le filtre à particules 6, mais il est bien évident qu'il pourrait être positionné en tout autre endroit de la ligne d'échappement. Par ailleurs, selon une variante de réalisation, il serait parfaitement envisageable de quantifier la contre-pression des gaz d'échappement par l'intermédiaire d'un modèle mathématique mémorisé dans le calculateur 11. Un tel mathématique mémorisé dans le calculateur 11. Un tel outil est en effet capable de reconstituer ce type d'information pertinente au moyen d'équations physiques et à partir d'informations de base. normale, a uniquement pour but de diminuer le bruit moteur, ainsi que d'une injection principale 31 qui est destinée à réaliser le couple moteur demandé (flèche f1) par le conducteur. L'axe horizontal X correspond à l'angle d'injection sur un cycle moteur et pour un cylindre. L'axe vertical Y marque quant à lui le passage au point mort haut, et constitue à ce titre un repère,

La figure 2 illustre une séquence d'injection au cours d'un cycle normal de fonctionnement. On observe trés bien que toute la séquence d'injection, regroupant la pré-injection 30a l'injection principale 31a, est réalisée dans cet exemple avant le passage au point mort haut matérialisé par l'axe Y, c'est-à-dire dans la zone de rendement optimal.

La figure 3 montre quant à elle une séquence d'injection retardée, du type de celle effectuée au cours de la régénération du filtre à particules 6. On remarque que la séquence d'injection est ici complètement décalée après le point mort haut. On note cependant que les quantités de carburant injectées, symbolisées par la longueur des rectangles, ont un peu augmenté par rapport à leurs homologues de la figure 2. En ce qui concerne la pré-injection 30b, cette augmentation est justifiée par des raisons de stabilité moteur. Pour l'injection principale 31b, il s'agit en fait de compenser la perte de couple moteur engendrée par le décalage de l'injection dans une zone où le rendement moteur est moindre. Il est en effet impératif de répondre uniformément à la demande du conducteur en terme de couple moteur, que ledit moteur 1 soit en phase normal de fonctionnement ou en phase de régénération,

La figure 4 représente une première séquence d'injection retardée qui est corrigée conformément au procédé de régénération selon l'invention. Le retard de l' injection principale 31c est modulé en fonction de la valeur effective de la contre-pression des gaz d'échappement qui est ici supérieure à sa valeur théorique. Cette particularité étant de nature à engendrer une augmentation de la température des gaz d'échappement, les seconds moyens ont commandé, d'une part, un retard d'injection principale ϕ'' inférieur au retard d'injection principale ϕ préprogrammé, et d'autre part, une diminution de la quantité de carburant injectée. Le but est ici de faire redescendre la température d'échappement, pour atteindra la valeur optimale retenue pour la régénération.

Comme l'injection principale 31c est moins retardée que dans le cas de la régénération de base de la figure 3, le rendement moteur est moins dégradé, Par conséquent, la quantité de carburant de l'injection principale 31c doit être moindre pour réaliser le couple demandé par le conducteur. Car malgré les contraintes thermiques liées à la régénération du filtre à particules 6, l'objectif premier est toujours de faire ce que demande le conducteur (flèche f1). Il faut que la réalisation de couple soit maintenue durant la régénération et ce de manière totalement transparente pour le conducteur. Il n'y a par contre pas d'incidence au niveau de la pré-injection 30c,

La figure 5 illustre quant à elle une seconde séquence d'injection retardée, également corrigée conformément au procédé de régénération selon l'invention. Le retard de l'injection principale 31d est ici toujours modulé en fonction de la valeur effective de la contre-pression des gaz d'échappement. Mais dans le cas présent, comme cette valeur effective est inférieure à sa valeur théorique, la température des gaz d'échappement va implicitement être inférieure à celle initialement retenue pour la régénération. Pour faire remonter cette température d'échappement à une valeur optimale, les seconds moyens vont avantageusement commander, d'une part, un retard d'injection principale ϕ' supérieur au retard d' injection principale ϕ préprogrammé, et d'autre part, une augmentation de la quantité de carburant injectée.
En effet, comme l'injection principale 31d est plus retardée que dans le cas de la régénération de base de la figure 3, le rendement moteur est plus dégradé. Par conséquent, la quantité de carburant de l'injection principale 31d doit ici être accrue pour réaliser le coupla demandé par le conducteur. Par contre là encore, la quantité de carburant correspondant à la pré-injection 30d n'est pas modifiée.

Dans ce mode particulier de réalisation, c'est la centre-pression des gaz d'échappement qui a été pris en compte pour corriger l'injection en phase de régénération. Il serait cependant tout aussi avantageux d'utiliser, en alternative ou en complètent, la température d'air d'admission. Bien entendu, l'intention peut être mise en oeuvre en prenant en compte tout autre facteur extérieur susceptible d'influer sur la température des gaz d'échappement, dans la mesure où l'impact des variations dudit facteur extérieur sur la température des gaz d'échappement est connu du système de contrôle moteur 10, et plus précisément le calculateur 11.

Bien entendu, l'invention concerne également tout véhicule automobile comportant un dispositif de régénération tel que précédemment décrit,

## Revendications

1. Procédé de régénération d'un filtre à particules (6) fonctionnant dans un circuit d"échappement d'un moteur à combustion interne (1), le procédé consistant à retarder l'injection principale (31b) de carburant d'un angle ϕ qui est déterminé par rapport au point mort haut et qui dépend du point de fonctionnement moteur (1), **caractérisé en ce que** ledit procédé comporte par ailleurs les étapes consistant à :
- déterminer la valeur effective d'au moins un facteur extérieur susceptible d'influer sur la température d'échappement moteur,
- modifier le retard d'injection principale ϕ préprogrammé, en fonction de l'écart entre la valeur effective et la valeur théorique de chaque facteur extérieur,
- modifier la quantité de carburait injectée de manière à maintenir le couple moteur constant.

2. Procédé de régénération selon la revendication 1, **caractérisé en ce que** lorsque la différence entre la valeur effective d'un facteur extérieur et sa valeur théorique est telle qu'elle tend à entraîner une diminution de la température des gaz d'échappement, la seconde étape consiste à commander un retard d'injection principale ϕ' supérieur au retard d'injection principale ϕ préprogrammé et à augmenter la quantité de carburant injectée.

3. Procédé de régénération selon la revendication 1, **caractérisé en ce que** lorsque la différence entre la valeur effective d'un facteur extérieur et sa valeur théorique est celle qu'elle tend à entraîner une augmentation de la température des gaz d'échappement, la seconde étape consiste à commander un retard de d'injection principale ϕ' ' inférieur au retard d'injection principale ϕ préprogrammé et à diminuer la quantité de carburant injectée.

4. Procédé de régénération selon l'une quelconque des revendications 1 à 3, **caractérisé en ce que** la détermination de la valeur effective d'un facteur extérieur susceptible d'influer sur la température d'échappement est réalisée au moyen d'un capteur de mesure.

5. Procédé de régénération selon l'une quelconque des revendications 1 à 4, **caractérisé en ce que** la détermination de la valeur effective d'un facteur extérieur susceptible d'influer sur la température d'échappement est réalisée au moyen d'un modèle mathématique.

6. Procédé de régénération selon l'une quelconque des revendications 1 à 5, **caractérisé en ce qu'**un facteur extérieur pris en compte est la contre-pression des gaz d'échappement.

7. Procédé de régénération selon l'une quelconque des revendications 1 à 6, **caractérisé en ce qu'**un facteur extérieur pris en compte est la température d'air d'admission.

8. Dispositif de mise en oeuvre du procédé de régénération selon l'une quelconque des revendications 1 à 7, **caractérisé en ce qu'**il comporte:
- des premiers moyens aptes à déterminer la valeur effective d'au moins un facteur extérieur susceptible d'influer sur la température d'échapement moteur,
- des seconds moyens aptes à modifier le retard d'injection principale ϕ préprogrammé, en fonction de l'écart entre la valeur effective et la valeur théorique de chaque facteur extérieur,
- des troisièmes moyens aptes à modifier la quantité de carburant injectée de manière à maintenir le couple moteur constant.

9. Dispositif de régénération selon la revendication 8,**caractérisé en ce que** lorsque la différence entre la valeur effective d'un facteur extérieur et sa valeur théorique est telle qu'elle tend à entraîner une diminution de la température des gaz d'échappement, les seconds moyens sont aptes à commander un retard de d'injection principale ϕ' supérieur au retard d'injection principale ϕ et à augmenter la quantité de carburant injectée.

10. Dispositif de régénération salon la revendication 8, **caractérisé en ce que** lorsque la valeur effective d'un facteur extérieur et sa valeur théorique est telle qu'elle tend à entraîner une augmentation de la température des gaz d'échappement, les seconds moyens sont aptes à commander un retard de d'injection principale ϕ' ' inférieur au retard d'injection principale ϕ et à diminuer la quantité de carburant injectée.

11. Dispositif de régénération selon l'une quelconque des revendications 8 à 10, **caractérisé en ce que** les premiers moyens comportent au moins un capteur de mesure apte à déterminer la valeur effective d'un facteur extérieur susceptible d'influer sur la température d'échappement moteur.

12. Dispositif de régénération selon l'une quelconque des revendications 8 à 11, **caractérisé en ce que** les premiers moyens comportent au moins un modèle mathématique apte à déterminer la valeur effective d'un facteur extérieur susceptible d'influer sur la température d'échappement moteur.

13. Dispositif de régénération selon l'une quelconque des revendications 8 à 12, **caractérisé en ce qu'**il est apte à prendre en compte la contre-pression des gaz d'échappement en tant que facteur extérieur susceptible d'influer sur la température desdits gaz d'échappement.

14. Dispositif de régénération selon l'une quelconque des revendications 1 à 13, **caractérisé en ce qu'**il est apte à prendre en compte la température d'air d'admission en tant que facteur extérieur susceptible d'influer sur la température desdits gaz d'échappement .

15. Véhicule automobile, **caractérisé en ce qu'** il comporte un dispositif de régénération selon l'une quelconque des revendications précédentes.
